# EUROPEAN PATENT APPLICATION

(11) **EP 1 439 471 A2**
(43) Date of publication of application: **21.07.2004**
(21) Application number: 04250248.4
(22) Date of filing: 19.01.2004
(51) Int. Cl.: G06F 13/42

(54) **Device and method for transmitting wired OR signal between two systems**

(30) Priority: 20.01.2003 JP 2003010632
(71) Applicant: FANUC LTD, Minamitsuru-gun, Yamanashi 401-0597 (JP)
(72) Inventor: Kanda, Kunio, Gotenba-shi, Shizuoka, 412-0021 (JP); Kumakura, Tatsuro, Gotenba-shi, Shizuoka, 412-0026 (JP); Hirohama, Hideyuki, Room 14-202 FANUC, Minamitsuru-gun, Yamanashi, 401-0511 (JP)
(74) Representative: Billington, Lawrence Emlyn

(57) **Abstract**

A device (16) in a first system (10) asserts a first wired OR signal line (15a) to a low level. This asserted state is transferred to a second system (20) via a first mask mechanism (15c). A second device (26) in the second system (20) asserts a second wired OR signal line (25a). This asserted state is similarly communicated to a first assert mechanism (15e) to maintain the signal line in an asserted state. The device that has made the assertion is processed. Then, values in first and second registers (12, 22) are changed to negate outputs from the first and a second mask mechanism (15c, 25c). It is verified that the first and second wired OR signal lines (15a, 25a) have been brought into a negate state. The values in the first and second registers (12, 22) are returned to the initial ones. A switching operation is performed so that each of the first and second mask mechanisms (15c, 25c) output the state of the wired OR signal line (15a, 25a), to return to the initial state.

## Description

### BACKGROUND OF THE INVENTION

### 1. Field of the Invention

The present invention relates to sharing of a wired OR signal between two systems.

### 2. Description of the Related Art

A wired OR signal line cannot be connected directly to two systems when they are installed at physically remote locations or use different ground potentials or reference voltages as references. In such a case, in order to allow the two systems to share a wired OR signal, a compensation circuit is required which operates to assert a wired OR signal in one of two systems to a low level when a wired OR signal in the other systems is asserted to a low level.

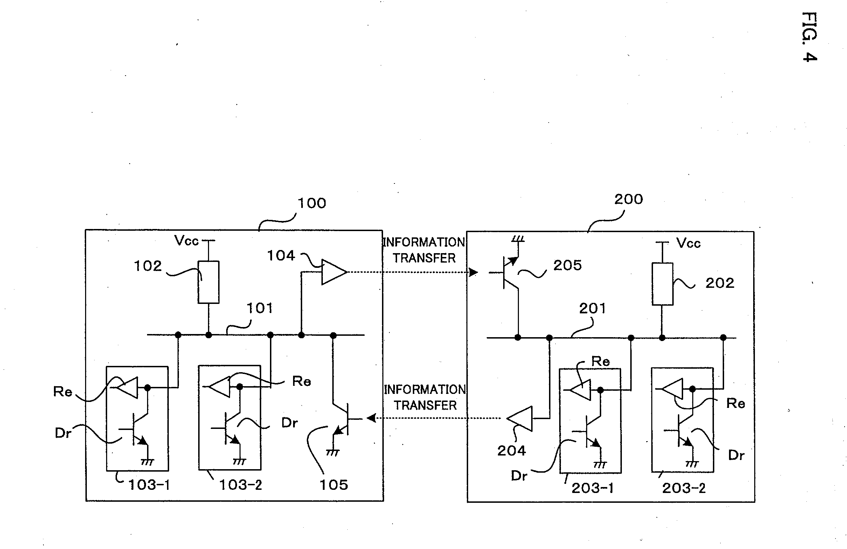

FIG. 4 shows an example of a circuit device that enables a wired OR signal to be shared between two such systems.

A plurality of devices 103-1, 103-2, ... are connected to a first wired OR signal line 101 in a first system 100. FIG. 4 shows that only two devices 103-1 and 103-2 are connected. The first wired OR signal line 101 comprises a low-level detection circuit 104 detecting that the first wired OR signal line 101 has been asserted to the low level and outputting the corresponding information and a low level compensation circuit 105 that maintains the first wired OR signal line 101 at the low level on the basis of information transferred by a low level detection circuit 204 in a second system 200. The wired OR signal line 101 is connected to a power source via a resistor 102.

The second system 200 has a similar circuit configuration. A power source is connected to a second wired OR signal line 201 via a resistor 202. Moreover, apluralityof devices 203-1, 203-2, ..., a low-level detection circuit 204, and a low-level compensation circuit 205 are connected to the second wired OR signal line 201.

The devices 103-1, 103-2, ..., connected to the first wired OR signal line 101, each comprise a drive circuit Dr that asserts the wired OR signal line 101 to the low level and a receiver circuit Re. Likewise, the devices 203-1, 203-2, ... , connected to the second wired OR signal line 201, each comprise a drive circuit Dr that asserts the wired OR signal line 201 to the low level and a receiver circuit Re.

For example, when the driver circuit Dr of the device 103-1 in the first system 100 is driven to set the first wired OR signal line 101 to the low level, the low-level detection circuit 104 detects this and transfers low-level detection information to the second system 200. Then, the low-level compensation circuit 205 in the second system 200 is driven to drive the second wired OR signal line 201 to the low level. Thus, the first and second systems 100 and 200 share a wired OR signal.

However, when the second wired OR signal line 201 is set to the low level, the low-level detection circuit 204 outputs low-level detection information to the first system 100. The low-level compensation circuit 105 in the first system 100 is driven to maintain the first wired OR signal line 101 at the low level. As a result, the driver circuit Dr of the device 103-1 is turned off. Then, although the first wired OR signal line 101 must usually return to a high level, the low-level compensation circuit 105 maintains the signal line 101 at the low level.

Thus, the wired OR signal line 101 of the first system 100 is maintained at the low level by the low-level compensation circuit 105 which is driven by information transferred by the low-level detection circuit 204 in response to the low level of the wired OR signal line 201 in the second system 200. The wired OR signal line 201 in the second system is maintained at the low level by the low-level compensation circuit 205 which is driven by information transferred by the low-level detection circuit 104 in response to the low level of the wired OR signal line 101 in the first system.

That is, when the wired OR signal line of any one of the systems is driven to the low level, the wired OR signal lines 101 and 201 of the systems 100 and 200, respectively, kept asserted to the low level. Subsequently, the wired OR signal lines 101 and 201 are locked and do not return to a high-level negate state.

To solve this problem, in a conventional technique (refer to, for example, Japanese Patent Application Laid-Open No. 6-35825), a plurality of registers or the like are provided to store the state of the wired OR signal lines of the two systems, and, on the basis of the state stored in these registers, the state of the wired OR signal line of one of the systems is prevented from being transmitted to the other, thereby preventing the wired OR signal lines of the two systems from being locked.

In common computer systems, the wired OR signal is often used to request an interruption to a device or for simultaneous broadcasting to whole system. Accordingly, if the signal can be asserted only once, this significantly restricts the use ofthesignal. Furthermore, the method for avoiding the locked state as described in Japanese Patent Application Laid-Open No. 6-35825, mentioned above, is disadvantageous in that a control circuit is complicated. Moreover, if the wired OR signal lines in both systems are simultaneously driven to the low level, the systems are locked. Then, the lock avoidance circuit may not operate correctly.

### SUMMARY OF THE INVENTION

In a device for transmitting wired OR signal between two systems, according to the first example of the present invention, each system comprises: output means for switching between a first state in which the system outputs a signal state of the wired OR signal line and a second state in which the system outputs a negate state of the wired OR signal line, and outputting either state to the other system; switching control means for switching an output state of the output means; and an assert mechanism that maintains the wired OR signal line in an asserted state in response to an asserted state transferred by the output means of the other system.

The switching control means may comprise a register controlled by a processor in the system. The output means may comprise amask mechanism which switches to the first state when the register indicates a predetermined value and which switches to the second state when the register indicates another value, and a transmission mechanism that transfers an output from the mask mechanism to the other system.

In a device for transmitting wired OR signal between two systems, according to the second aspect of the present invention, each system comprises output means for outputting the signal state of a wired OR signal line to the other system; switching and outputting means for switching between the first state where the signal state transmitted by the output means in the other system is output and the second state where negate state is output, and outputting the switched state; switching and controlling means for switching the output of the switching and outputting means; and an assert mechanism that switches the wired OR signal line between an asserted state or a negate state according to the output state of the switching and outputting means.

The switching and controlling means may be composed of register controlled by a processor in the system, and the switching and outputting means may be composed of a mask mechanism which switches to the first state when the register has a predetermined value and switches to the second state when the register has a value other than the predetermined value.

In a method for transmitting wired OR signal between two systems, according to the first aspect of the present invention, each system comprises output means for switching between a first state in which the system outputs a signal state of the wired OR signal line and a second state in which the system outputs a negate state of the wired OR signal line, and outputting either state to the other system, and assert means for maintaining the wired OR signal line in the system in an asserted state in response to an assert signal from the output means in the other system; and the method comprises switching the wired OR signal line in one of the systems to the asserted state if the wired OR signal line of one of the systems is brought into the asserted state, when each of the output means is in the first state; processing a device that has brought the wired OR signal line in the other system into the asserted state, after the switching; and switching each of the output means to the second state, verifying the negate state of the wired OR signal lines in the two systems, and then switching each of the output means to the first state, after finishing the processing of the device.

In a method for transmitting wired OR signal between two systems, according to the second aspect of the present invention, each system comprises output means for outputting the signal state of a wired OR signal line to the other system; switching and outputting means for switching between the first state where the signal state transmitted by the output means in the other system is output and the second state where negate state is output, and outputting the switched state; switching and controlling means for switching the output of the switching and outputting means; and an assert mechanism that switches the wired OR signal line between an asserted state or a negate state according to the output state of the switching and outputtingmeans; andthemethodcomprises: switching the wired OR signal line in one of the two systems to the asserted state if the wired OR signal line of the other system is brought into the asserted state, when each of the switching and outputting means is in the first state; processing a device that has brought the wired OR signal line in the other system into the asserted state, after the switching; and switching each of the switching and outputting means to the second state, verifying the negate state of the wired OR signal lines in the two systems, and then switching each of the switching and outputting means to the first state, after finishing the processing of the device.

The present invention provides a device and method for transmitting a wired OR signal between two systems which device and method can clear a locked state using a simple configuration.

### BRIEF DESCRIPTION OF THE DRAWINGS

The above and other objects of features of the present invention will be apparent from the following description taken with reference to the accompanying drawings, in which:
FIG. 1 is a schematic block diagram of two systems to which an embodiment of the present invention has been applied;
FIG. 2 is a detailed block diagram of a first example of first and second OR signal transmitting and receiving means in the embodiment shown in FIG. 1, including their related elements; and
FIG. 3 is a detailed block diagram of a second example of first and second OR signal transmitting and receiving means in the embodiment shown in FIG. 1, including their related elements;
FIG. 4 is a diagram showing an example of a circuit device that allows a wired OR signal to be shared between two systems.

### DESCRIPTION OF THE EMBODIMENTS

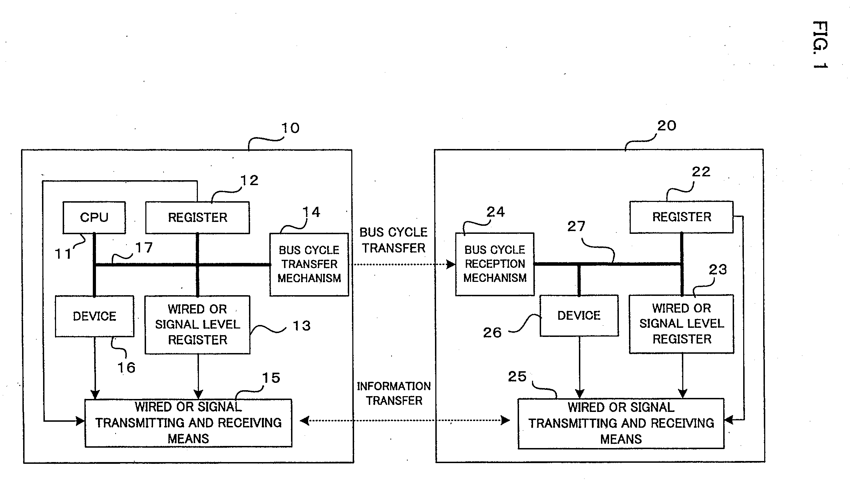

FIG. 1 is a schematic block diagram of two systems to which an embodiment of the present invention has been applied.

A first system 10 comprises a processor (CPU) 11, a first register 12, a first wired OR signal level register 13, a bus cycle transfer mechanism 14, and a first system side device 16. These components are connected together by a system bus 17. A plurality of devices are connected to the system bus 17, but only one device 16 is shown in FIG. 1. The first system 10 also comprises a first wired OR signal transmitting and receiving means 15.

A second system 20 comprises a second register 22, a second wired OR signal level register 23, a bus cycle transfer mechanism 24, and a plurality of second system side devices 26 (only one of the devices is shown in FIG. 1). These components are connected together by a system bus 27. The second system 20 also comprises a second wired OR signal transmitting and receiving means 25.

The processor 11 can execute, via the first system bus 17, a read from or a write to the first system side device 16, a write to the first register, and a read from the first wired OR signal level register. The bus cycle transfer mechanism 14 transfers a read/write cycle executed on a particular device by the processor 11, to the second system 20.

The bus cycle receiving mechanism 24 of the second system 20 executes a read/write cycle transferred by the first system 10 using the second system bus 27. Thus, the processor 11 in the first system 10 can execute a read from or a write to the second system side device 26 in the second system 20, a write to the second register 22, and a read from the second wired OR signal level register 23.

Besides the connections between the two systems 10 and 20 by the system buses 17 and 27, the first and second wired OR signal transmitting and receiving means 15 and 25 are provided in the first and second systems 10 and 20, respectively, in order to allow a wired OR signal to be shared between the first system 10 and the second system 20.

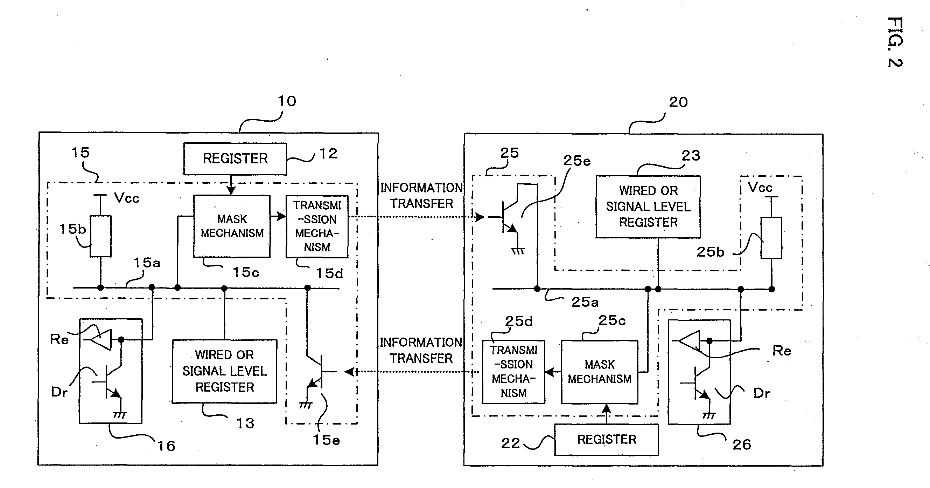

FIG. 2 is a detailed block diagram of a first example of the first and second OR signal transmitting and receiving means 15 and 25, including their related elements.

The first wired OR signal transmitting and receiving means 15 is composed of a first wired OR signal line 15a, a resistor 15b, first mask mechanism 15c, and first assert mechanism 15e connected to the first wired OR signal line 15a, and a first transmission mechanism 15d connected to the first mask mechanism 15c. The first system side device 16 and the first wired OR signal level register 13 are connected to the first wired OR signal line 15a. The first system side device 16 and the first wired OR signal level register 13 are each connected to a power source via the resistor 15b. The first register 12 is connected to the first mask mechanism 15c.

Likewise, the second wired OR signal transmitting and receiving means 25, provided in the second system 20, is composed of a second wired OR signal line 25a, a resistor 25b, second mask mechanism 25c, and second assert mechanism 25e connected to the second wired OR signal line 25a, and a second transmission mechanism 25d connected to the second mask mechanism 25c. The second system side device 26 and the second wired OR signal level register 23 are connected to the second wired OR signal line 25a. The second system side device 26 and the second wired OR signal level register 23 are each connected to a power source via the resistor 25b. The second register 22 is connected to the second mask mechanism 25c.

In this embodiment, the mask mechanisms 15c and 25c and the transmissionmechanisms 15d and 25d constitute output means for transmitting the state of a wired OR signal in one of the systems to the other system. The registers 12 and 22 constitute switching control means for switching the output state of the output means.

A plurality of devices are connected to the first wired OR signal line 15a in the first system 10 and to the second wired OR signal line 25a in the second system 20, respectively. However, in FIG. 2, only one device 16 and only one device 26 are shown as in the case of FIG. 1. Each of the devices 16 and 26 comprises a drive circuit Dr that asserts the connected wired OR signal line to a low level as well as a receiver circuit Re.

In the first system 10, the first system side device 16 or the first assert mechanism 15e drives the first wired OR signal line 15a to the low level. The first mask mechanism 15c and the first wired OR signal level register 13 detect the signal level of the first wired OR signal line 15a. Similarly, in the second system 20, the second system side device 26 or the second assert mechanism 25e drives the second wired OR signal line 25a to the low level. The second mask mechanism 25c and the second wired OR signal level register 23 detect the signal level of the second wired OR signal line 25a.

In an initial state, the first register 12 and the second register 22 are set at a predetermined value that precludes outputs from the first mask mechanism 15c and second mask mechanism25c, respectively, frombeingmasked. Furthermore, the first and second wired OR signal lines 15a and 25a are in a negate state. That is, neither of the devices 16 and 26, connected to the first and second wired OR signal lines 15a and 25a, respectively, are driven, so that the first and second wired OR signal lines 15a and 25a are in a high-level negate state.

Inthis initial state, the first mask mechanism 15c outputs the negate state to the first transmission mechanism 15d. The first transmission mechanism 15d then transfers the negate state to the second system 20. The second assert mechanism 25e receives the negate state but does not operate. The second assert mechanism 25e thus does not assert the second wired OR signal line 25a to the low level.

Likewise, the secondmaskmechanism25c outputs the negate state to the second transmission mechanism 25d. The second transmission mechanism 25d then transfers the negate state to the first system 10. The first assert mechanism 15e receives the negate state but does not operate. The first assert mechanism 15e thus does not assert the first wired OR signal line 15a to the low level.

The first and second systems 10 and 20 maintain this state.

Then, the drive circuit Dr of the first system side device 16 in the first system 10 is driven to assert the first wired OR signal line 15a to the low level. Then, the first mask mechanism 15c and the first transmission mechanism 15d transfer this asserted state to the second system 20. As a result, the second assert mechanism 25e operates to assert the second wired OR signal line 25a to the low level. Thus, the first and second systems 10 and 20 can share a wired OR signal, and the first system side device 16 can transmit the asserted state to the second system side device 26.

Moreover, the second mask mechanism 25c outputs the asserted state of the second wired OR signal line 25a and transfers the asserted state to the first system 10 via the second transmission mechanism 25d. Thus, the first assert mechanism 15e in the first system 10 is driven to maintain the first wired OR signal line 15a in the asserted state. As a result, the first and second wired OR signal lines 15a and 25a are maintained in the asserted state by the first system side device 16, the first assert mechanism 15e, and the second assert mechanism 25e.

Once the asserted state has been transferred and the first system side device 16 has finished its processing, the drive circuit Dr of the first system side device 16 is turned off to stop asserting the first wired OR signal line 15a. However, since the first assert mechanism 15e maintains the first wired OR signal line 15a in the asserted state, the first and second wired OR signal lines 15a and 25a maintain the asserted state.

Thus, the processor 11 uses a bus cycle to check the changed state of the second device 26 to change the values in the first and second registers 12 and 22. Since the value in the first register 12 changes from the predetermined value, the first mask mechanism 15c outputs the negate state. The first transmission mechanism 15d then transfers the negate state to the second system 20. As a result, the second assert mechanism 25e stops asserting the second wired OR signal line 25a. The second wired OR signal line 25a consequently maintains the negate state unless any of the devices of the second system 20 makes an assertion.

Furthermore, since the value in the second register 22 changes fromthepredeterminedvalue, the secondmaskmechanism 25c outputs the negate state. The second transmission mechanism 25d then transfers the negate state to the first system 10. As a result, the first assert mechanism 15e stops asserting the first wired OR signal line 15a. Thus, the first wired OR signal line 15a is also brought into the negate state. Therefore, the first wired OR signal line 15a is not brought into the asserted state unless any of the devices of the first system 10 makes an assertion.

The processor 11 reads data from the first wired OR signal level register 13 and uses a bus cycle to read data from the second wired OR signal level register 23. The processor 11 thus verifies that both the first and second wired OR signals are in the negate state. Then, the processor 11 returns the values in the first and second registers 12 and 22 to the one that precludes outputs from the first and second mask mechanisms 15c and 25c, respectively, frombeingmasked. This returns the systems to their initial state, as a result, the systems wait an assertion from any device.

In the above example of an operation, the first system side device 16 in the first system 10 asserts the wired OR signal. However, the above description applies to the case in which the second system side device 26 in the second system 20 asserts the wired OR system.

If any device in the first or second system 10 or 20 asserts the wired OR signal, then the first and second wired OR signal lines 15a and 25a are asserted to the low level as described above, and a device different from the one having already made an assertion subsequently asserts the wired OR signal. In this case, even if the processor 11 has finished processing the first asserting device and the values in the first and second registers 12 and 13 are changed to mask outputs from the first and second mask mechanisms 15c and 25c to establish the negate state, the first or second wired OR signal 15a or 25a to which the second asserting device is connected is maintained in the asserted state.

Thus, when the processor 11 reads data from the first and second wired OR signal level registers 13 and 23 to check whether or not both of them are in the negate state, it detects that one of them is not in the negate state. Then, the processor 11 executes processing of the second asserting device. This stops the assertion made by the second asserting device to negate the wired OR signal line asserted by this device.

The processor 11 checks the first and second wired OR signal level registers 13 and 23 to verify that the wired OR signal has been negated. After the verification, the processor 11 returns the values in the first and second registers 12 and 22 to the predetermined value that precludes outputs from the first and second mask mechanisms 15c and 25c, respectively, from being masked. Thus, the first and second mask mechanisms 15c and 25c are brought into their initial state, which they output the state of the first and second wired OR signal lines 15a and 25a. The systems thus wait for the wired OR signal to be asserted by any device.

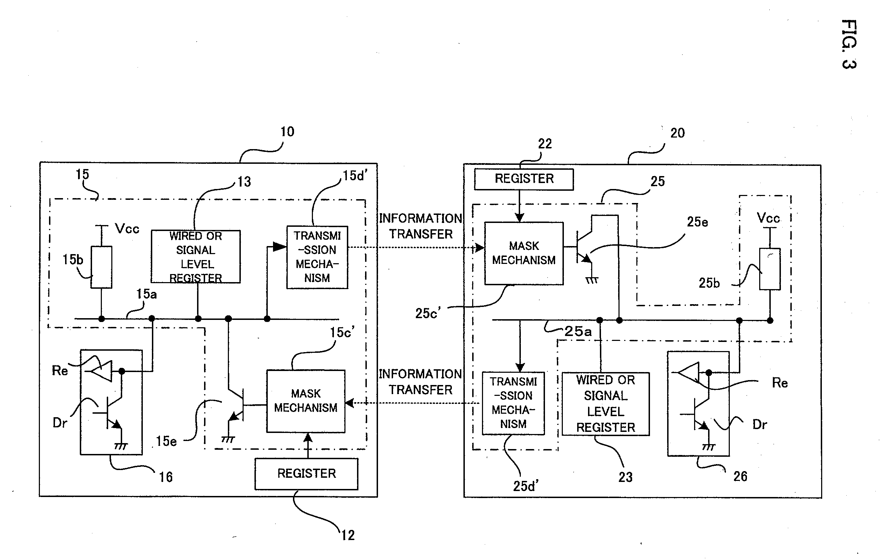

FIG. 3 is a detailed block diagram of a second example of the first and second OR signal transmitting and receiving means 15 and 25, including their related elements. In FIG.3, reference numerals 15d' and 25d' denote a fist and a second transmitting mechanism, and reference numerals 15c' and 25c' denote a first and a secondmaskmechanism. The same reference numerals are used for other components shown in FIG. 3 identical with those in the first example shown in FIG. 2.

This second example (FIG. 3) is different from the first example (FIG. 2) in that selection of state is carried out after transmitting the state of one system to the other system. More specifically, connection of the first and second transmitting mechanism 15d' and 25d' with other components and connection of the first and second mask mechanism 15c' and 25c' with other components in the second example as shown in FIG. 3 are different from connection of the first and second transmitting mechanism 15d and 25d with other components and connection of the first and second mask mechanism 15c and 25c with other components in the first example as shown in FIG. 2.

The first transmitting mechanism 15d' is connected directly to the first wired OR signal line 15a, and transmits the state of the first wired OR signal line 15a to the second system 20. This transmitted information is received by the second mask mechanism 25c' in the second wired OR signal transmitting and receiving means 25. This second mask mechanism 25c' is connected to the second assert mechanism 25e.

In the same manner, the second transmitting mechanism 25d' is connected directly to the second wired OR signal line 25a, and transmits the state of the second wired OR signal line 25a to the first system 10. This transmitted information is received by the first mask mechanism 15c' in the first wired OR signal transmitting and receiving means 15. This first mask mechanism 15c' is connected to the first assert mechanism 15e.

A first and second registers 12 and 22 are connected to the first and second mask mechanism 15c' and 25c', respectively. Other configuration is identical with the first example shown in FIG. 2. In the second example of the first and second wired OR signal transmitting and receiving means 15 and 25, the first and second transmitting mechanism 15d' and 25d' serve as outputting means for outputting the state of the first and second wired OR signal lines 15a and 25a, respectively, while the first and second mask mechanism 15c' and 25c' serve as switching and outputting means for switching between a state where the received signal is output and to or from a state where the received signal is switched to negate state and output.

As the operation of the second example is similar to the operation of the first example, the operation of the second example is briefly described here. Each of the first and second registers 12 and 22 is set to a predetermined value which precludes outputs from the first mechanism 15c and second mechanism 25c from being masked.

Assuming that both the first and second wired OR signal lines 15a and 25a are in a negate state. This negate state is transmitted by the first transmitting mechanism 15d' to the second system 20, whereupon the second mask mechanism 25c' outputs this negate state to the second assert mechanism 25e, but the second assert mechanism 25e does not operates. As a result, the second wired OR signal line 25a is not asserted to a low level.

In the same manner, the second transmitting mechanism 25d' transmits the negate state to the first system 10, whereupon the first mask mechanism 15c' outputs this negate state the first assert mechanism 15e, but the first assert mechanism 15e does not operates, so that the first wired OR signal line 15a is not asserted to a low level.

When the drive circuit Dr of the first system side device 16 in the first system 10 is driven to assert the first wired OR signal line 15a to a low level, the first transmitting mechanism 15d' transmits this asserted state to the second system 20, whereupon the second mask mechanism 25c' outputs the asserted state to cause the second assert mechanism 25e to operate, thereby asserting the second wired OR signal line 25a to a low level.

The second transmitting mechanism 25d' transmits the asserted state of the second wired OR signal line 25a to the first system 10, whereupon the first mask mechanism 15c' outputs this asserted state to drive the first assert mechanism 15e, thereby maintaining the first wired OR signal line 15a to an asserted state. As a result, the first and second wired OR signal lines 15a and 25a are maintained in the asserted state by the first system side device 16, the first assert mechanism 15e and the second assert mechanism 25e.

Though the drive circuit Dr of the first system side device 16 is turned off, the first assert mechanism 15e maintains the first wired OR signal line 15a to an asserted state. As a result, the first and second wired OR signal lines 15a and 25a are maintained in an asserted state.

Thus, the processor 11 uses a bus cycle to check the changed state of the second system side device 26 and changes the values in the first and second registers 12 and 22. As a result, the first and second mask mechanism 15c' and 25c' output negate state so that the first and second assert mechanism 15e and 25e interrupt asserting the first and second wired OR signal lines 15a and 25a. After that, this negate state is maintained unless the devices 16 and 26 make an assertion.

The processor 11 reads data from the first and second wired OR signal level registers 13 and 23 and verifies that both the first and second wired OR signals in a negate state. Then the processor 11 returns the values in the first and second registers 12 and 22 to the one that precludes outputs from the first and second mask mechanism 15c' and 25c' from being masked. This returns the system to their initial state, as a result, the systems wait an assertion from any device.

In a case where the second system side device 26 in the second system 20 asserts the wired OR signal line 25e, an operation similar to the one described above is carried out, so that explanation of this case is omitted.

In the above embodiment, only the first system 10 comprises the processor 11. However, the present invention is applicable to the case in which the first system 20 also comprises a processor. In this case, the bus cycle transfer mechanism 14 and the bus cycle reception mechanism 24 are each used as a bus cycle transfer and reception mechanism so that both systems can carry out bus cycle transfers.

As described above, according to the present invention, the simple arrangement can be used to clear the state in which the wired OR signal is locked between the two systems.

## Claims

1. A device for transmitting wired OR signal between two systems, each system comprising:
output means for switching between a first state in which the system outputs a signal state of the wired OR signal line and a second state in which the system outputs a negate state of the wired OR signal line, and outputting either state to the other system;
switching control means for switching an output state of said output means; and
an assert mechanism that maintains the wired OR signal line in an asserted state in response to an asserted state transferred by the output means of the other system.

2. The device for transmitting wired OR signal between two systems according to claim 1, wherein said switching control means comprises a register controlled by a processor in the system, and said output means comprises:
a mask mechanism which switches to said first state when the register indicates a predetermined value and which switches to the second state when the register indicates another value; and
a transmission mechanism that transfers an output from said mask mechanism to the other system.

3. A device for transmitting wired OR signal between two systems, each system comprising:
output means for outputting the signal state of a wired OR signal line to the other system;
switching and outputting means for switching between the first state where the signal state transmitted by the output means in the other system is output and the second state where negate state is output, and outputting the switched state;
switching and controlling means for switching the output of said switching and outputting means; and
an assert mechanism that switches the wired OR signal line between an asserted state or a negate state according to the output state of said switching and outputting means.

4. The device for transmitting wired OR signal between two systems according to claim 3, wherein said switching and controlling means is composed of a register controlled by a processor in the system, and said switching and outputtingmeans is composed of amaskmechanism which switches to the first state when said register has a predetermined value and switches to the second state when the register has a value other than the predetermined value.

5. A method for communicating wired OR signal between two systems, in which each system comprises output means for switching between a first state in which the system outputs a signal state of the wired OR signal line and a second state in which the system outputs a negate state of the wired OR signal line, and outputting either state to the other system, and assert means for maintaining the wired OR signal line in the system in an asserted state in response to an assert signal from the output means of the other system, the method comprising:
switching the wired OR signal line in one of the systems to the asserted state if the wired OR signal line of one of the systems is brought into the asserted state, when each of the output means is in the first state;
processing a device that has brought the wired OR signal line in said other system into the asserted state, after the switching; and
switching each of said output means to the second state, verifying the negate state of the wired OR signal lines in the two systems, and then switching each of said output means to the first state, after finishing the processing of the device.

6. The method for transmitting wired OR signal between two systems, in which each system comprises output means for outputting the signal state of a wired OR signal line to the other system; switching and outputting means for switching between the first state where the signal state transmitted by the output means in the other system is output and the second state where negate state is output, and outputting the switched state; switching and controlling means for switching the output of said switching and outputting means; and an assert mechanism that switches the wired OR signal line between an asserted state or a negate state according to the output state of said switching and outputting means; the method comprising:
switching the wired OR signal line in one of the two systems to the asserted state if the wired OR signal line of the other system is brought into the asserted state, when each of the switching and outputting means is in the first state;
processing a device that has brought the wired OR signal line in said other system into the asserted state, after the switching; and
switching each of said switching and outputting means to the second state, verifying the negate state of the wired OR signal lines in the two systems, and then switching each of said switching and outputting means to the first state, after finishing the processing of the device.
